# EUROPEAN PATENT APPLICATION

(11) **EP 1 437 251 A1**
(43) Date of publication of application: **14.07.2004**
(21) Application number: 03100021.9
(22) Date of filing: 08.01.2003
(51) Int. Cl.: B60K 15/03

(54) **Tank having a component mounted therein**

(71) Applicant: Delphi Technologies, Inc., Troy, MI 48007 (US)
(72) Inventor: Randolph, Marpessa, 1750 Luxembourg (LU); Raimann, Norbert, 54456 Tawern (DE)
(74) Representative: Beissel, Jean

(57) **Abstract**

The present invention proposes a tank, in particular a vehicle fuel tank, having a component (20) mounted therein. Such a tank comprises a tank wall (12) and a shaft (14) having a first end (18) and a second end (21). A base portion (16) is arranged on the first end (18) of the shaft (14), the base portion (16) comprising a weld area (22) on its surface facing the tank wall (12) and weld material (24) is arranged in the weld area (22) for welding the shaft (14) to the tank wall (12). A component (20) is mounted on the second end (21) of the shaft (14). According to an important aspect of the invention, the base portion (16) is wider than the weld area (22), and a circumferential area (26) of the base portion (16) is configured so as to, when mounted to the tank wall (12), at least partially rest on the tank wall (12).

## Description

### FIELD OF THE INVENTION

The present invention generally relates to a thermoformed tank, in particular in a vehicle fuel tank, having a component mounted therein.

### BACKGROUND OF THE INVENTION

Components, such as fuel level sensors, fill or vent valves or jet pumps are generally arranged inside a fuel tank of an automotive vehicle for detecting a number of conditions in such a fuel tank. Such components are normally mounted on a substantially cylindrical shaft having a base portion at one end. The base portion has weld material on a weld area facing the tank wall for connecting the shaft to the tank wall. The weld material, e.g. two thick ribs of weld material arranged in cross form, is heated up prior to the assembly of the shaft in the fuel tank. Such a weld ensures good welding quality and stiffness over lifetime.

During the welding of the shaft to the tank wall of the fuel tank, the shaft is however prone to tipping. While the weld material is hot, the shaft can move about and there is a high risk that it is not positioned correctly. This results in the component mounted on the shaft not being positioned correctly and hence in not proper functioning of the component. In order to ensure accurate functioning of the component(s), the latter must be accurately positioned in the fuel tank, i.e. tipping of the shaft during assembly must be avoided.

One solution to avoid tipping of the shaft during assembly is to provide the shaft with a wider base portion and a wider weld area. Although a larger area of weld material avoids tipping during assembly, the increased area of heated weld material can damage the tank wall. Indeed, deformations of the wall surface can occur.

Another solution to avoid tipping of the shaft during assembly is to use at least two shafts welded to the fuel tank and a connection bar for connecting the shafts. A more stable assembly is thereby achieved. However, deformation of the shaft assembly itself can occur during welding, which would again compromise the correct positioning of the component(s). Furthermore, the increased weight of such a shaft assembly is a disadvantage.

### OBJECT OF THE INVENTION

The object of the present invention is to provide an improved tank having a component mounted therein. This object is achieved by a tank as claimed in claim 1.

### SUMMARY OF THE INVENTION

The present invention proposes a tank, in particular a vehicle fuel tank, having a component mounted therein. Such a tank comprises a tank wall and a shaft having a first end and a second end. A base portion is arranged on the first end of the shaft, the base portion comprises a weld area on its surface facing the tank wall, and weld material is arranged in the weld area for welding the shaft to the tank wall. A component is mounted on the second end of the shaft. According to an important aspect of the invention, the base portion is wider than the weld area, and a circumferential area of the base portion is configured so as to, when mounted to the tank wall, at least partially rest on the tank wall.

Tipping of the shaft, during assembly in a tank, is avoided in that the circumferential area of the widened base portion rests on the tank wall during assembly. The weld area is only as big as is necessary for securely maintaining the shaft in place after assembly. The tank wall and/or the base portion are hence not deformed by unnecessarily increasing the size of the weld area. Furthermore, less weld material is used and costs can be reduced. Also, there is no need to provide a second shaft and a connection bar, so that the total weight of the assembly can remain low. The present invention hence allows to accurately position a component in a fuel tank without the inconveniences of the prior art tanks.

The weld material preferably has a thickness ranging between 2 and 5 mm and can be arranged in the form of a cross, an H or a circle.

According to one embodiment of the invention, the circumferential area of the base portion comprises protrusions directed towards the tank wall, and the protrusions are dimensioned such that, when the weld material is in contact with the tank wall, the protrusions rest on the tank wall. The protrusions ensure that the distance between the tank wall and the base portion remains constant, so that the shaft can be correctly positioned on the tank wall and so that tipping is avoided during assembly.

According to another embodiment of the invention, the tank wall comprises protrusions directed towards the base portion, and the protrusions are dimensioned such that, when the weld material is in contact with the tank wall, the circumferential area of the base portion rests on the protrusions.

The circumferential area, resp. the tank wall, can comprise at least three protrusions, the protrusions being equidistant from each other. According to another solution, the protrusions are joined together so as to form a circumferential rib.

According to a further embodiment of the invention, the tank wall comprises a recess for receiving the weld material, and the recess is dimensioned such that, when the weld material is in contact with the tank wall, the circumferential area of the base portion rests on the tank wall.

According to yet another embodiment of the invention, the circumferential area of the base portion comprises protrusions directed towards the tank wall, and the tank wall comprises a recess for receiving the weld material. The protrusions and the recess are dimensioned such that, when the weld material is in contact with the tank wall, the protrusions of the base portion rest on the tank wall.

The tank can be a fuel tank, and the component can be a fuel level sensor, a fill or vent valve or a jet pump.

Preferably, the shaft and the base portion and, where applicable, the protrusions or the circumferential rib are formed in one piece, e.g. through extrusion or injection molding.

The present invention also concerns a mounting feature comprising a shaft for mounting the component thereon and a base portion at one end of the shaft, wherein weld material is arranged in a weld area of the base portion for welding the mounting feature to a tank wall inside a tank. According to an important aspect of the invention, the base portion is wider than the weld area and comprises, in a circumferential area, protrusions which are configured so as to, when mounted on the tank wall, be directed towards and rest on the tank wall.

### BRIEF DESCRIPTION OF THE DRAWINGS

The present invention will now be described, by way of example, with reference to the accompanying drawings, in which:
- Fig.1:: schematically shows a cut through an assembly of a component mounted on a tank wall according to a first embodiment of the invention;
- Fig.2:: schematically shows a bottom view of a base portion of Fig.1; and
- Fig.3:: schematically shows a cut through an assembly of a component mounted on a tank wall according to different embodiments of the invention.
In the figures, same reference signs indicate similar or identical elements.

### DETAILED DESCRIPTION OF A PREFERRED EMBODIMENT

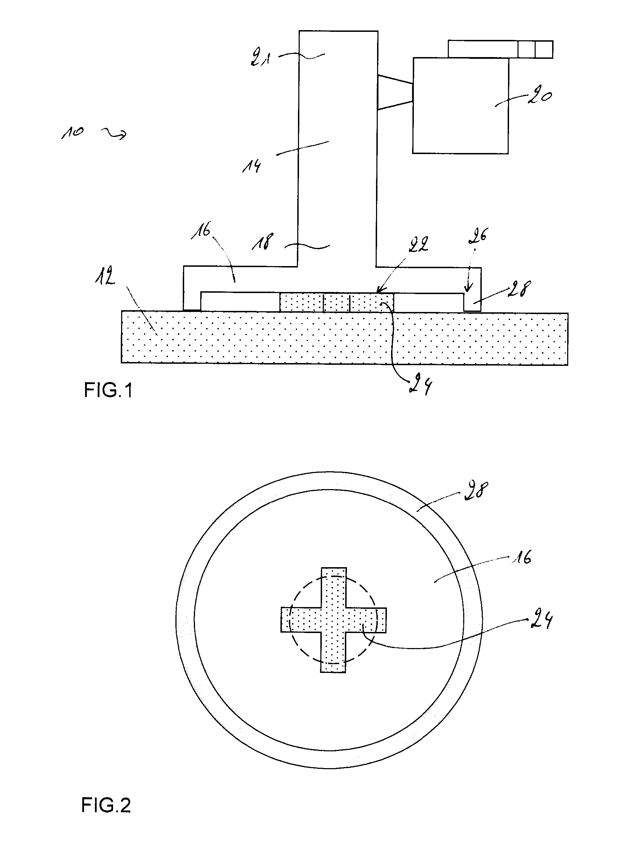

Fig.1 shows a mounting feature 10 connected to a tank wall 12, in particular of a fuel tank of an automotive vehicle.

The mounting feature 10 comprises a generally cylindrical shaft 14 having a base portion 16 at a first end 18 thereof. A component 20, in this case a vent valve, is mounted to a second end 21 of the shaft 14.

The shaft 14 and base portion 16 are generally integrally formed through extrusion or injection molding. The base portion 16 centrally comprises a weld area 22 for receiving weld material 24 thereon. The weld area 22 is more or less of the same diameter as the shaft 14 and comprises e.g. two strips of weld material 24 arranged in cross form, as can be seen on Fig.2.

The base portion 16 is of larger diameter than the weld area 22 and comprises, in a circumferential area 26 of the base portion 16, protrusions 28 directed away from the shaft 14. The protrusions 28 can be at least three equidistant protrusions or, as shown in Figs 1 and 2, a circumferential rib. During the assembly of the mounting feature 10 to the tank wall 12, the weld material 24 is heated and is brought into contact with the tank wall 12. At the same time, the circumferential rib 28 rests on the tank wall 12 so that tipping of the mounting feature 10 is avoided. Due to the fact that the wider base portion 16 rests, by means of the circumferential rib 28, on the tank wall 12, correct assembly of the mounting feature on the tank wall is ensured. It will be appreciated that, before assembly, the thickness of the weld material 24 can be slightly bigger than the height of the protrusions 28. During assembly, the weld material 24 can melt out so that, after assembly, the thickness of the weld material 24 corresponds to the height of the protrusions 28. The melting out of the weld material 24 allows to compensate for possible irregularities e.g. in the tank wall 12, in the weld area 22 or in the thickness of the weld material 24.

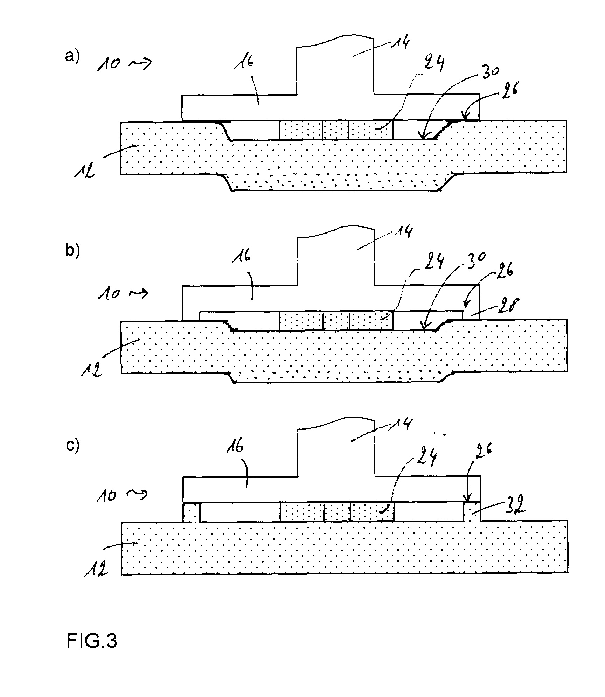

Other embodiments of the invention are shown in Fig.3, which shows the end portion of the mounting feature 10, which is connected to the tank wall 12. In the embodiment of Fig.3a, a recess 30 is formed in the tank wall 12 for receiving the weld material 24 therein. The circumferential area 26 of the base portion 16 rests on the tank wall 12 without the need for the circumferential rib 28 of Fig.1. In Fig.3b, the embodiments of Fig.1 and 3a are combined; a recess 30 is formed in the tank wall 12 for receiving the weld material 24 and, at the same time, a circumferential rib 28 is formed on the base portion 16. In this embodiment, the rib 28 can be made lower and the recess 30 shallower, while still accommodating the same thickness of weld material 24. According to the embodiment of Fig.3c, a rib 32 is formed on the tank wall 12 for receiving the circumferential area 26 of the base portion 16 thereon. The base portion 16 can then be formed without protrusions 28. It will be appreciated that other configurations are possible to have the circumferential area 26 of the base portion 16 resting on the tank wall 12.

### LIST OF REFERENCE SIGNS

- 10: mounting feature
- 12: tank wall
- 14: shaft
- 16: base portion
- 18: first end of the shaft
- 20: component
- 21: second end of the shaft
- 22: weld area
- 24: weld material
- 26: circumferential area
- 28: protrusions
- 30: recess
- 32: rib

## Claims

1. Tank, in particular vehicle fuel tank, having a component mounted therein, said tank comprising:
a tank wall;
a shaft having a first end and a second end;
a base portion arranged on said first end of said shaft, said base portion comprising a weld area on its surface facing said tank wall, wherein weld material is arranged in said weld area for welding said shaft to said tank wall; and
a component mounted on said second end of said shaft
**characterized in that**
said base portion is wider than said weld area; and
a circumferential area of said base portion is configured so as to, when mounted to said tank wall, at least partially rest on said tank wall.

2. Tank according to claim 1, wherein said weld material has a thickness ranging between 2 and 5 mm.

3. Tank according to claim 1 or 2, wherein said weld material is arranged in the form of a cross, an H or a circle.

4. Tank according to any of claims 1 to 3, wherein
said circumferential area of said base portion comprises protrusions directed towards said tank wall, and
said protrusions are dimensioned such that, when said weld material is in contact with said tank wall, said protrusions rest on said tank wall.

5. Tank according to any of claims 1 to 4, wherein
said tank wall comprises protrusions directed towards said base portion, and
said protrusions are dimensioned such that, when said weld material is in contact with said tank wall, said circumferential area of said base portion rests on said protrusions.

6. Tank according to claim 4 or 5, wherein said circumferential area, resp. said tank wall, comprises at least three protrusions, said protrusions being equidistant from each other.

7. Tank according to claim 4 or 5, wherein said protrusions are joined together so as to form a circumferential rib.

8. Tank according to any of claims 1 to 3, wherein
said tank wall comprises a recess for receiving said weld material, and
said recess is dimensioned such that, when said weld material is in contact with said tank wall, said circumferential area of said base portion rests on said tank wall.

9. Tank according to any of claims 1 to 3, wherein
said circumferential area of said base portion comprises protrusions directed towards said tank wall,
said tank wall comprises a recess for receiving said weld material, and
said protrusions and said recess are dimensioned such that, when said weld material is in contact with said tank wall, said protrusions of said base portion rest on said tank wall.

10. Tank according to any of the previous claims, wherein
said tank is a fuel tank, and
said component is a fuel level sensor, a fill or vent valve or a jet pump.

11. Tank according to any of claims 4 to 8, wherein said shaft and said base portion and, where applicable, said protrusions or said circumferential rib are formed in one piece.

12. Mounting feature for mounting a component inside a tank, in particular inside a vehicle fuel tank, said mounting feature comprising:
a shaft for mounting said component thereon;
a base portion at one end of said shaft; and
weld material arranged in a weld area of said base portion, for welding said mounting feature to a tank wall,
**characterized in that**
said base portion is wider than said weld area; and
a circumferential area of said base portion comprises protrusions, said protrusions being configured so as to, when mounted on said tank wall, be directed towards and rest on said tank wall.

13. Mounting feature according to claim 12, wherein said circumferential area comprises at least three protrusions, said protrusions being equidistant from each other.

14. Mounting feature according to claim 12 or 13, wherein said protrusions are joined together so as to form a circumferential rib.
